# EUROPEAN PATENT APPLICATION

(11) **EP 4 694 499 A1**
(43) Date of publication of application: **11.02.2026**
(21) Application number: 24781123.5
(22) Date of filing: 21.03.2024
(51) Int. Cl.: H04W 72/25, H04W 72/02, H04W 72/04, H04L 5/00, H04W 76/18, H04W 24/08, H04L 1/18, H04W 4/40, H04W 92/18

(54) **METHOD AND DEVICE FOR PERFORMING COMMUNICATION ON BASIS OF MULTIPLE CARRIERS**

(30) Priority: 29.03.2023 KR 20230041521; 30.03.2023 US 202363455941 P; 03.04.2023 US 202363456787 P; 04.04.2023 US 202363457116 P; 04.04.2023 US 202363457124 P; 21.06.2023 KR 20230079902
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Jung, Minkyu
(86) International application number: PCT/KR2024/003572
(87) International publication number: WO 2024/205132

(57) **Abstract**

A method for performing wireless communication by a first device, and a device supporting same are provided. The first device may: perform physical sidelink shared channel (PSSCH) transmission on a first carrier; determine a physical sidelink feedback channel (PSFCH) reception occasion related to the PSSCH transmission; on the basis of the absence of PSFCH reception on the PSFCH reception occasion, increase the number of discontinuous transmissions (DTXs) by 1; on the basis that the number of DTXs for the first carrier reaches a DTX threshold, trigger a carrier selection procedure; and on the basis of the carrier selection procedure being triggered, determine one or more candidate carriers for carrier selection for a logical channel.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method for performing wireless communication by a first device may be provided. For example, the method may comprise: performing physical sidelink shared channel (PSSCH) transmission on a first carrier; determining a physical sidelink feedback channel (PSFCH) reception occasion related to the PSSCH transmission; incrementing, based on that PSFCH reception is absent on the PSFCH reception occasion, a discontinuous transmission (DTX) number by 1; triggering, based on that the DTX number for the first carrier reaches a DTX threshold, a carrier selection procedure; and determining, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: performing physical sidelink shared channel (PSSCH) transmission on a first carrier; determining a physical sidelink feedback channel (PSFCH) reception occasion related to the PSSCH transmission; incrementing, based on that PSFCH reception is absent on the PSFCH reception occasion, a discontinuous transmission (DTX) number by 1; triggering, based on that the DTX number for the first carrier reaches a DTX threshold, a carrier selection procedure; and determining, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: performing physical sidelink shared channel (PSSCH) transmission on a first carrier; determining a physical sidelink feedback channel (PSFCH) reception occasion related to the PSSCH transmission; incrementing, based on that PSFCH reception is absent on the PSFCH reception occasion, a discontinuous transmission (DTX) number by 1; triggering, based on that the DTX number for the first carrier reaches a DTX threshold, a carrier selection procedure; and determining, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a non-transitory computer-readable storage medium storing instructions may be provided. For example, the instructions, when executed, may cause a first device to perform operations comprising: performing physical sidelink shared channel (PSSCH) transmission on a first carrier; determining a physical sidelink feedback channel (PSFCH) reception occasion related to the PSSCH transmission; incrementing, based on that PSFCH reception is absent on the PSFCH reception occasion, a discontinuous transmission (DTX) number by 1; triggering, based on that the DTX number for the first carrier reaches a DTX threshold, a carrier selection procedure; and determining, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a resource unit for CBR measurement, based on an embodiment of the present disclosure.
FIG. 10 shows beam management based on an embodiment of the present disclosure.
FIG. 11 shows a method for a UE to trigger a carrier (re)selection procedure, based on an embodiment of the present disclosure.
FIG. 12 shows a method for a UE that triggers a carrier (re)selection procedure to determine candidate carrier(s), based on an embodiment of the present disclosure.
FIG. 13 shows a method for a first device to perform wireless communication, based on an embodiment of the present disclosure.
FIG. 14 shows a method for a second device to perform wireless communication, based on an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

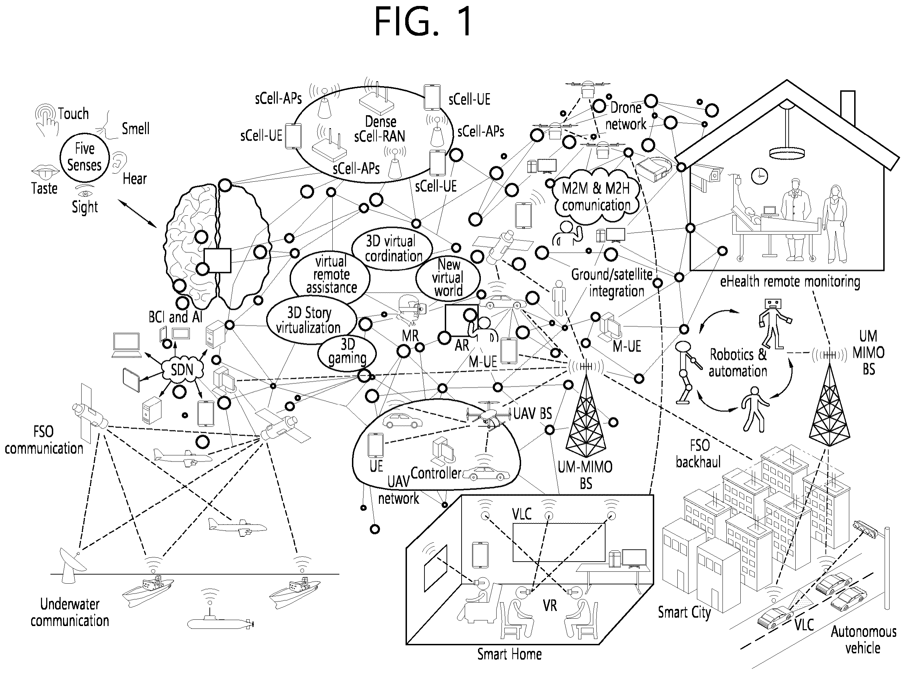

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

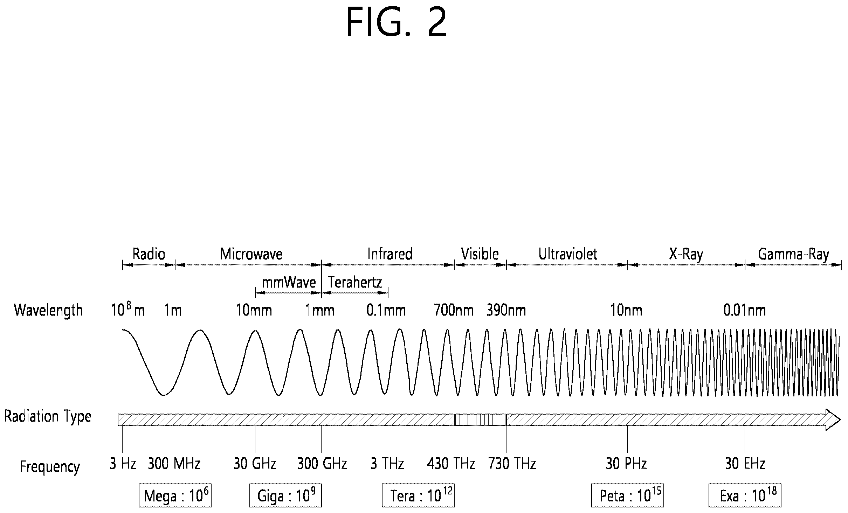

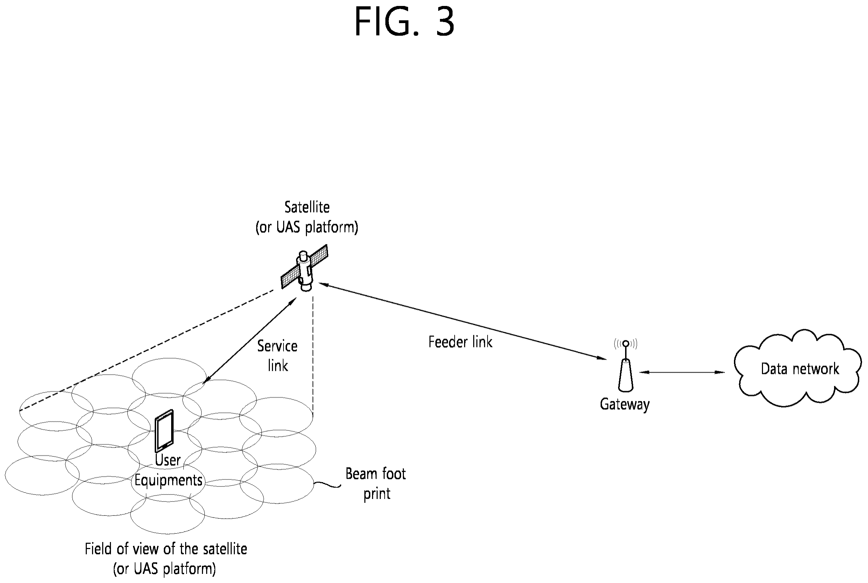

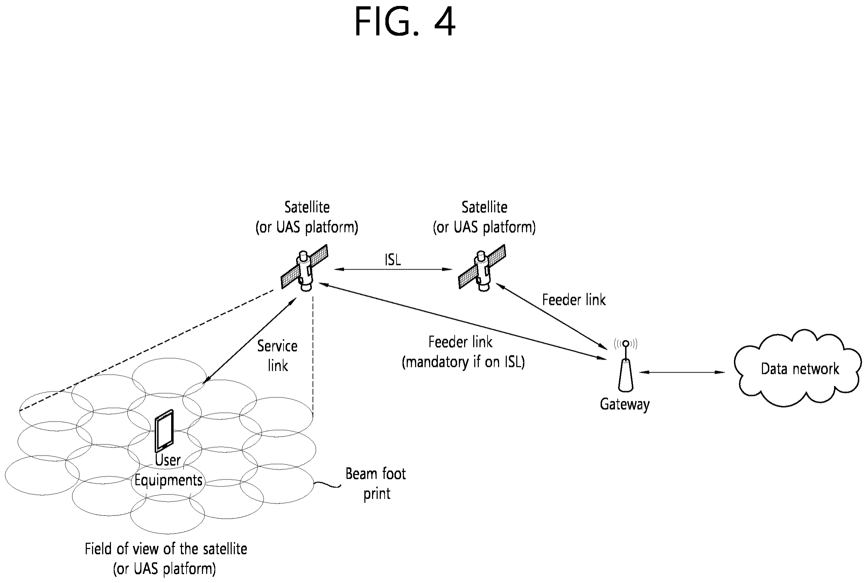

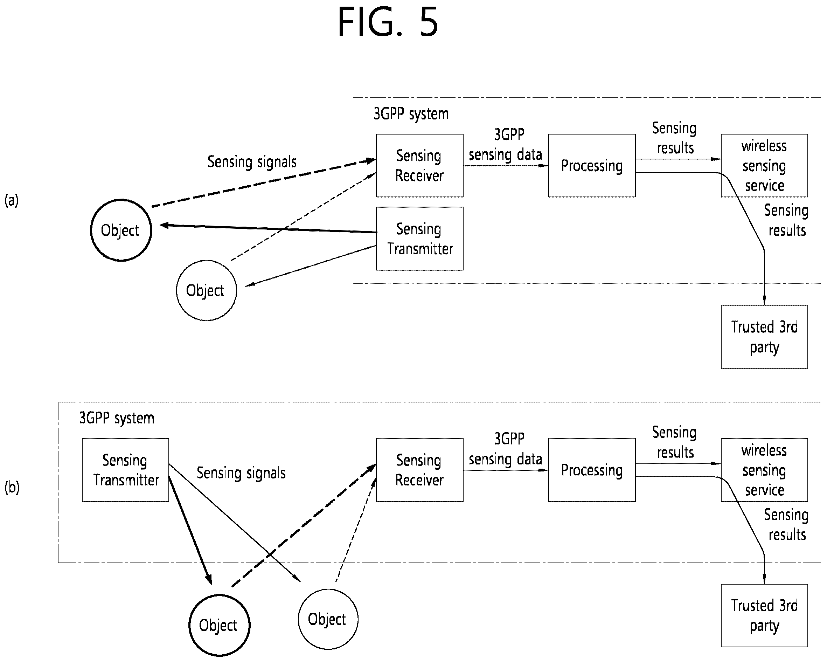

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

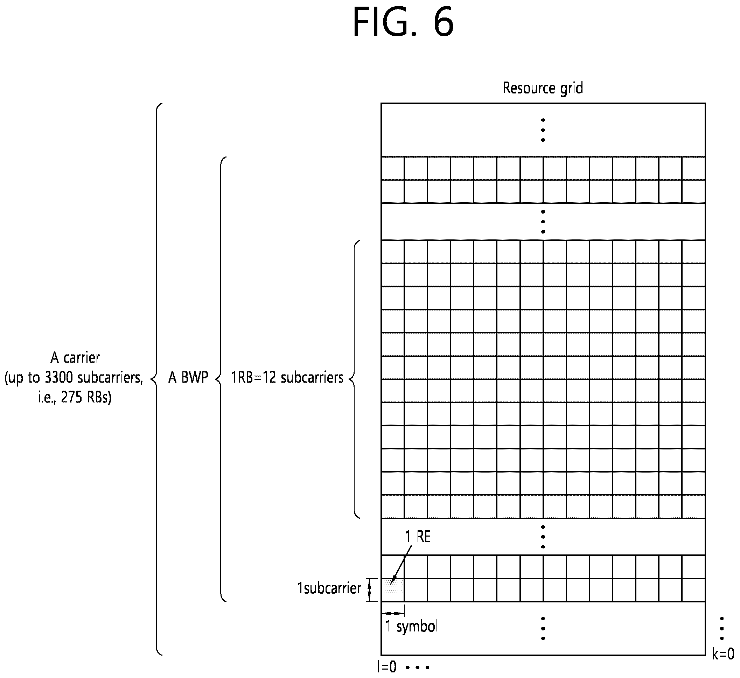

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

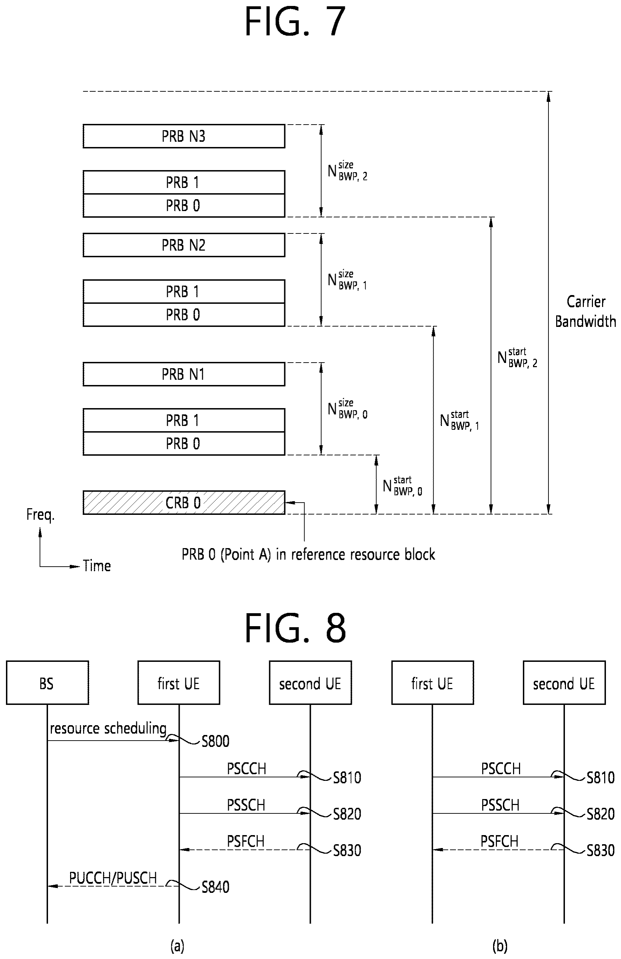

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

For example, the 1^{st}-stage SCI format may include a SCI format 1-A and/or a SCI format 1-B, and the 2^{nd}-stage SCI format may include a SCI format 2-A, a SCI format 2-B, a SCI format 2-C and/or a SCI format 2-D.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits
- Beta_offset indicator - 2 bits as provided by higher layer parameter sl-BetaOffsets2ndSCI
- Number of DMRS port - 1 bit
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

**[Table 3]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.
(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot} = M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 4.

**[Table 4]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

The UE applies one cyclic shift from a cyclic shift pair to a sequence used for the PSFCH transmission.

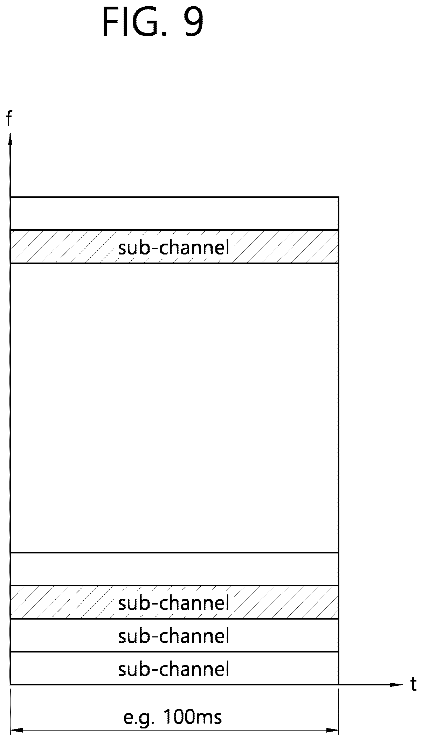

FIG. 9 shows a resource unit for CBR measurement, based on an embodiment of the present disclosure. The embodiment of FIG. 9 may be combined with various embodiments of the present disclosure.

Referring to FIG. 9, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 9, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the base station.

For example, if a PSCCH and a PSSCH are multiplexed in a frequency domain, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 5 shows an example of SL CBR and SL RSSI.

**[Table 5]**

| SL CBR | |
|---|---|
| Definition | SL Channel Busy Ratio (SL CBR) measured in slot n is defined as the portion of sub-channels in the resource pool whose SL RSSI measured by the UE exceed a (pre-)configured threshold sensed over a CBR measurement window [n-a, n-1], wherein a is equal to 100 or 100·2^{µ} slots, according to higher layer parameter *sl-TimeWindowSizeCBR.* |
| Applicable for | RRC_IDLE intra-frequency, |
| | RRC_IDLE inter-frequency, |
| | RRC_CONNECTED intra-frequency, |
| | RRC _CONNECTED inter-frequency |

| SL RSSI | |
|---|---|
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol. |
| | For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, |
| | RRC_IDLE inter-frequency, |
| | RRC_CONNECTED intra-frequency, |
| | RRC_CONNECTED inter-frequency |

Referring to Table 5, the slot index may be based on physical slot index.

Table 6 shows an example of SL channel occupancy ratio (CR).

**[Table 6]**

| | |
|---|---|
| Definition | Sidelink Channel Occupancy Ratio (SL CR) evaluated at slot n is defined as the total number of sub-channels used for its transmissions in slots [*n-a, n-1*] and granted in slots [*n, n+b*] divided by the total number of configured sub-channels in the transmission pool over [*n-a, n+b*]. |
| Applicable for | RRC_IDLE intra-frequency, |
| | RRC_IDLE inter-frequency, |
| | RRC_CONNECTED intra-frequency, |
| | RRC_CONNECTED inter-frequency |

NOTE 1: a is a positive integer and b is 0 or a positive integer. a and b are determined by UE implementation with a+b+1 = 1000 or 1000·2^{u} slots, according to higher layer parameter sl-TimeWindowSizeCR, b < (a+b+1)/2, and n+b shall not exceed the last transmission opportunity of the grant for the current transmission.

NOTE 2: SL CR is evaluated for each (re)transmission.

NOTE 3: In evaluating SL CR, the UE shall assume the transmission parameter used at slot n is reused according to the existing grant(s) in slot [n+1, n+b] without packet dropping.

NOTE 4: The slot index is based on physical slot index.

NOTE 5: SL CR can be computed per priority level

NOTE 6: A resource is considered granted if it is a member of a selected sidelink grant.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Table 7 shows an example of the channel access procedure (CAP) supported in NR-U.

**[Table 7]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 7, the LBT type or CAP for DL/UL/SL transmission may be defined. However, Table 7 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 8 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 8]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, after selecting a random value between the minimum CW and the maximum CW mapped to the CAPC, the UE may select a backoff counter (BC) between zero and the random value. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. If the UE attempting to transmit data detects a collision, the UE may increase the CW size mapped to the CAPC, and the UE may reselect a BC between zero and the increased CW. The UE that successfully transmits a packet may initialize the CW size (to the CW min).

For example, Tₛₗ (= 9 usec) is a basic sensing unit or sensing slots, and may include a measurement duration for at least 4 usec. For example, the front 9 usec of T_{f} (= 16 usec) may be configured to be Tₛₗ. For example, mₚ may be a constant mapped per CAPC and used in T_{d} calculation. For example, a smaller value may be mapped to a lower CACP value (higher priority).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 26 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in conventional NR Uu (operations between a base station and a UE), beam management operations (beam scheduling, beam selection, beam failure recovery, etc.) have been newly introduced in mmWave frequencies.

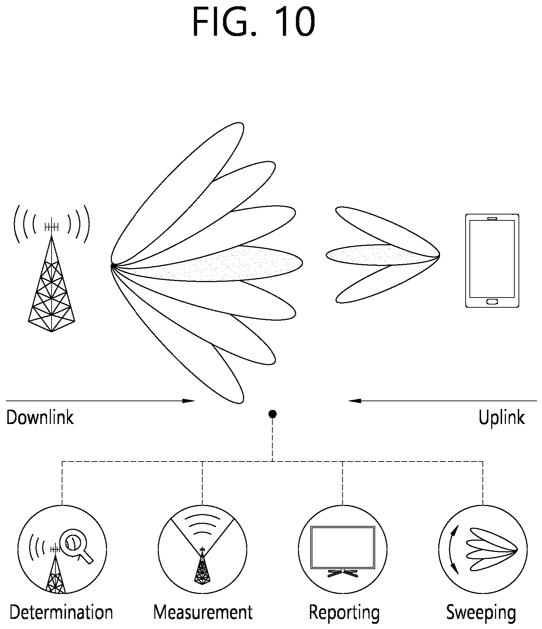

FIG. 10 shows beam management based on an embodiment of the present disclosure. The embodiment of FIG. 10 may be combined with various embodiments of the present disclosure.

Referring to FIG. 10, beam management may include beam determination, beam measurement, beam reporting, and/or beam sweeping. In the case of forming a beam using multiple antennas, a narrow antenna beam may be transmitted far in a specific direction, but may not cover the entire cell widely at once. Rather, if an antenna beam is formed in one direction, almost no antenna beam is formed in the other direction, so no signal may be transmitted. Therefore, in such cases, a transmitter or a receiver may transmit or receive data using beam forming, respectively. In this case, the transmitter or the receiver shall continuously update and manage the beam(s) used, which may be called beam management.

For example, the UE may perform the following operation-based sidelink FR2 (sidelink mmWave frequencies-based sidelink communication) operation.
- Beam sweeping operation: an operation that covers a spatial domain using transmit and/or receive beams for a certain time interval in a predefined manner
- Beam measurement operation: an operation that measures a reference signal (RS) transmitted by another device to find an RS whose measurement value is equal to or greater than a threshold
- Beam selection operation: an operation that selects the best beam (receive beam and/or transmit beam) based on the result of the beam measurement
- Beam reporting operation: an operation that reports the selected best beam to another device or the base station

For example, if a UE detects that the number of failures in a beam being used for sidelink communication reaches a threshold, the UE may trigger a sidelink beam failure recovery procedure to restore the beam.

Meanwhile, in conventional LTE V2X, a UE supporting multi-channel operation (multi-carrier operation or carrier aggregation) may select a specific carrier for transmitting sidelink data, and the UE may select available resource(s) on the carrier and transmit sidelink data through the selected resource(s) and the carrier.

Meanwhile, if a UE communicates based on multiple carriers, the UE may need to (re)select a carrier by triggering a carrier (re)selection procedure. In this case, if a condition for triggering the carrier (re)selection procedure is not defined, the UE may continuously attempt communication on a carrier having a poor communication environment. This can degrade communication reliability and inefficiently utilize radio resources. Furthermore, when the UE performs communication based on multiple carriers, if the UE performs carrier (re)selection without considering whether HARQ feedback for a logical channel is enabled, a case where HARQ feedback is not supported may occur. Accordingly, reliability of communication may not be guaranteed.

In the present disclosure, carrier or resource reselection operation for a UE supporting multi-carrier operation, and a device supporting the same, are proposed as follows.

For example, if the transmitting UE declares a sidelink radio link failure (RLF) on a specific sidelink carrier (or one of selected carriers, or all selected carriers, or all configured available carriers), the transmitting UE may trigger a carrier reselection procedure to replace the carrier on which the RLF occurs with other carrier(s). Herein, for example, if the number of DTXs (e.g., an event in which PSFCH for PSCCH/PSSCH transmission is not received) on the specific carrier reaches a pre-configured threshold, the transmitting UE may declare the RLF on the carrier. In this case, for example, if the transmitting UE is configured with information related to the number of DTXs and information related to the DTX threshold, and if the number of DTXs reaches the DTX threshold for the specific sidelink carrier, the transmitting UE may trigger the carrier (re)selection procedure. That is, if the sidelink RLF is declared on the specific sidelink carrier (or one of selected carriers, or all selected carriers, or all configured available carriers), the carrier reselection procedure may be triggered and new carrier(s) may be re-selected. Furthermore, for example, the transmitting UE may release resource(s) being used or selected on the carrier on which the RLF occurs, and the transmitting UE may reselect resource(s) to be used on the new carrier(s) and map the resource(s) to the newly selected carrier(s). Herein, for example, the UE may use the newly re-selected resource(s) on the newly selected carrier(s) by triggering resource reselection. That is, the transmitting UE may select the newly selected carrier(s) and the new resource(s) to be used on the carrier(s), and the transmitting UE may transmit sidelink data using the selected carrier(s) and the selected resource(s).

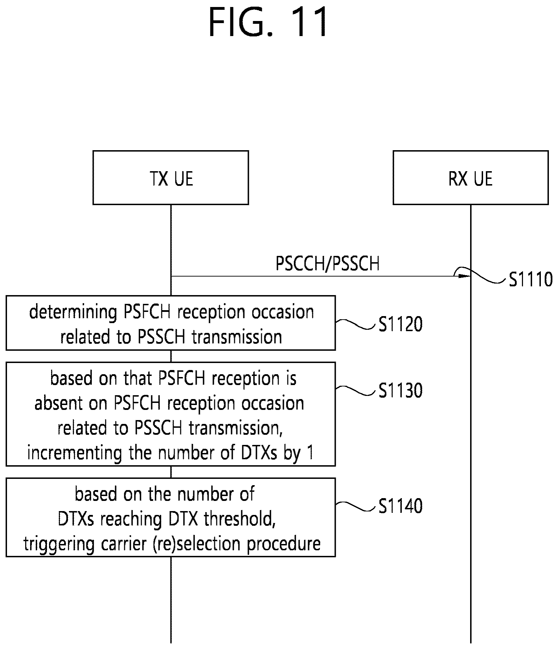

FIG. 11 shows a method for a UE to trigger a carrier (re)selection procedure, based on an embodiment of the present disclosure. The embodiment of FIG. 11 may be combined with various embodiments of the present disclosure.

Referring to FIG. 11, in step S1110, the transmitting UE may perform PSCCH transmission and PSSCH transmission related to the PSCCH transmission to the receiving UE. In step S1120, the transmitting UE may determine a PSFCH reception occasion related to the PSSCH transmission. In addition, the transmitting UE may perform PSFCH monitoring on the PSFCH reception occasion. In step S1130, based on that PSFCH reception is absent on the PSFCH reception occasion related to the PSSCH transmission, the transmitting UE may increment the number of DTXs by 1. In step S1140, based on the number of DTXs reaching a DTX threshold, the transmitting UE may trigger a carrier (re)selection procedure. Herein, for example, information related to the DTX threshold may be configured or pre-configured for the transmitting UE.

For example, if the transmitting terminal (e.g., supporting sidelink carrier aggregation operation and supporting sidelink unlicensed band operation) declares a (consistent or one shot) LBT failure on a specific sidelink carrier (or one of selected carriers, or all selected carriers, or all configured available carriers), the transmitting UE may trigger a carrier reselection procedure to replace the carrier on which the (consistent or one shot) LBT failure occurs with other carrier(s). That is, if the sidelink (consistent or one shot) LBT failure is declared on the specific sidelink carrier (or one of selected carriers, or all selected carriers, or all configured available carriers), the carrier reselection procedure may be triggered and new carrier(s) may be re-selected. In addition, for example, the transmitting UE may release resource(s) being used or selected on the carrier on which the (consistent or one shot) LBT failure occurs, and the transmitting UE may reselect resource(s) to be used on the new carrier(s) and map the resource(s) to the newly selected carrier(s). Herein, for example, the UE may use the newly re-selected resource(s) on the newly selected carrier(s) by triggering resource reselection. That is, the transmitting UE may select the newly selected carrier(s) and the new resource(s) to be used on the carrier(s), and the transmitting UE may transmit sidelink data using the selected carrier(s) and the selected resource(s).

For example, on a specific sidelink carrier (or one of selected carriers, or all selected carriers, or all configured available carriers), if a beam failure (e.g., the MAC layer receives a beam failure instance from the physical layer) occurs, or if a beam failure recovery procedure is triggered, or if a beam failure recovery procedure fails, the UE (e.g., supporting sidelink carrier aggregation operation and supporting sidelink FR2 operation) may trigger a carrier reselection procedure to replace the carrier where the beam failure occurs or the beam failure recovery procedure is triggered or the beam failure recovery procedure fails with other carrier(s). That is, on the specific sidelink carrier (or one of selected carriers, or all selected carriers, or all configured available carriers), if the beam failure occurs, or if the beam failure recovery procedure is triggered, or if the beam failure recovery procedure fails, the carrier reselection procedure may be triggered and new carrier(s) may be re-selected. In addition, for example, the UE may release resource(s) being used or selected on the carrier where the beam failure occurs or the beam failure recovery procedure is triggered or the beam failure recovery procedure fails, and the UE may reselect resource(s) to be used on the new carrier(s) and map the resource(s) to the newly selected carrier(s). Herein, for example, the UE may use the newly re-selected resource(s) on the newly selected carrier(s) by triggering resource reselection. That is, the UE may select the newly selected carrier(s) and the new resource(s) to be used on the carrier(s), and the UE may transmit and receive sidelink data using the selected carrier(s) and the selected resource(s).

For example, if the transmitting UE declares a PC5 RRC reconfiguration failure on a specific sidelink carrier (or one of selected carriers, or all selected carriers, or all configured available carriers), the transmitting UE may trigger a carrier reselection procedure to replace the carrier on which the PC5 RRC reconfiguration failure occurs with other carrier(s). Herein, for example, if the UE transmits an RRCReconfigurationSidelink message on the sidelink carrier and does not receive an RRCReconfigurationCompleteSidelink message or an RRCReconfigurationFailureSidelink message until a T400 timer expires, the UE may declare the PC5 RRC reconfiguration failure. That is, if the sidelink PC5 RRC reconfiguration failure is declared on the specific sidelink carrier (or one of selected carriers, or all selected carriers, or all configured available carriers), the carrier reselection procedure may be triggered and new carrier(s) may be re-selected. In addition, for example, the transmitting UE may release resource(s) being used or selected on the carrier where the PC5 RRC reconfiguration failure occurs, and the transmitting UE may reselect resource(s) to be used on the new carrier(s) and map the resource(s) to the newly selected carrier(s). Herein, for example, the UE may use the newly re-selected resource(s) on the newly selected carrier(s) by triggering resource reselection. That is, the transmitting UE may select the newly selected carrier(s) and the new resource(s) to be used on the carrier(s), and the transmitting UE may transmit sidelink data using the selected carrier(s) and the selected resource(s).

For example, in the case of multi-carrier operation, if sidelink carrier/SL BWP/sidelink resource pool/SL HARQ entity (re-)selection is triggered, and if data with HARQ feedback enabled of the UE (e.g., the transmitting UE) is available for a logical channel, the UE performing sidelink data transmission and reception on multi-carriers may consider only sidelink carrier(s)/SL BWP(s)/sidelink resource pool(s)/SL HARQ entit(ies) in which the sidelink data transmission is allowed, including a SL resource pool configured with PSFCH, as (re-)selectable candidate sidelink carrier(s)/SL BWP(s)/sidelink resource pool(s)/SL HARQ entit(ies). Herein, for example, the data with HARQ feedback enabled may be mapped to the same sidelink unicast service or groupcast service or broadcast service. Specifically, for example, in the case of multi-carrier operation, if the carrier (re)selection procedure is triggered, and if data with HARQ feedback enabled is available for a logical channel, the UE may consider only carrier(s) including a SL resource pool configured with PSFCH as candidate carrier(s) for (re)selection.

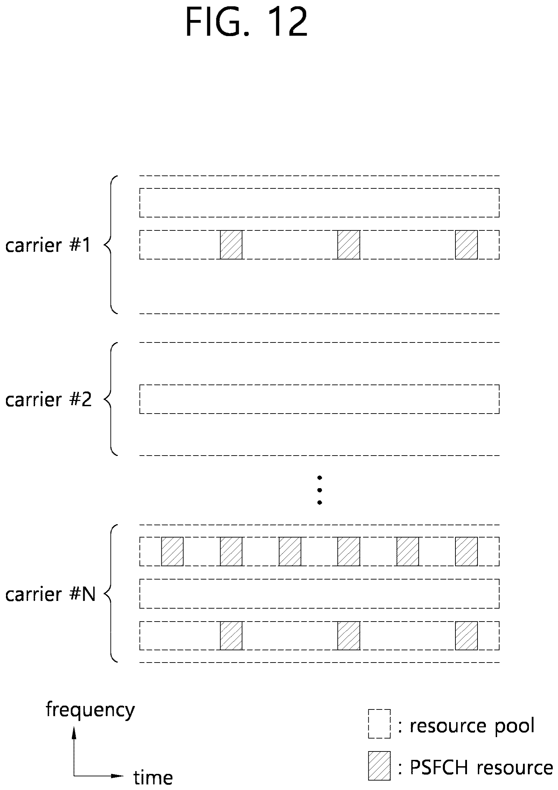

FIG. 12 shows a method for a UE that triggers a carrier (re)selection procedure to determine candidate carrier(s), based on an embodiment of the present disclosure. The embodiment of FIG. 12 may be combined with various embodiments of the present disclosure.

Referring to FIG. 12, multiple carriers may be configured for the UE. In the embodiment of FIG. 12, it is assumed that N carriers are configured for the UE, where carrier #1 and carrier #N include a resource pool configured with PSFCH, and the remaining carriers do not include a resource pool configured with PSFCH. In this case, if a carrier (re)selection procedure is triggered and data with HARQ feedback enabled is available for a logical channel, the UE may consider only carrier(s) including a SL resource pool configured with PSFCH as (re)selectable candidate carrier(s). For example, the UE may consider/determine only carrier #1 and carrier #N as (re)selectable candidate carriers. For example, the UE may exclude the remaining carriers from the (re)selectable candidate carriers.

For example, in the case of multi-carrier operation, if sidelink carrier/SL BWP/sidelink resource pool/SL HARQ entity (re-)selection is triggered, and if both data with HARQ feedback enabled and data with HARQ feedback disabled of the UE (e.g., the transmitting UE) are available for logical channels, the UE performing sidelink data transmission and reception on multi-carriers may consider only sidelink carrier(s)/SL BWP(s)/sidelink resource pool(s)/SL HARQ entit(ies) in which the sidelink data transmission is allowed, including a SL resource pool configured with PSFCH, as (re-)selectable candidate sidelink carrier(s)/SL BWP(s)/sidelink resource pool(s)/SL HARQ entit(ies). Herein, for example, data with HARQ feedback enabled and data with HARQ feedback disabled may be mapped to the same sidelink unicast service or groupcast service or broadcast service.

For example, if CBR measurement values of all sidelink carriers/SL BWPs/sidelink resource pools/SL HARQ entities in which the sidelink data transmission is allowed, including a SL resource pool configured with PSFCH, are higher than a CBR threshold value for a pre-configured data-related priority (e.g., sidelink priority), the UE may keep the existing selected sidelink carrier/SL BWP/sidelink resource pool/SL HARQ entity or (re-)select the sidelink carrier/SL BWP/sidelink resource pool/SL HARQ entity by changing the attribute of the data to HARQ feedback disabled.

For example, when the UE transmits HARQ feedback enabled logical channel data, a MAC CE, a PC5 RRC message, a PC5-S message, or a HARQ feedback enabled MAC PDU (or a HARQ feedback enabled TB), the UE may (re-)select a sidelink carrier for transmitting the HARQ feedback enabled logical channel data, the MAC CE, the PC5 RRC message, the PC5-S message, or the HARQ feedback enabled MAC PDU (or the HARQ feedback enabled TB) as follows. That is, when the UE transmits the HARQ feedback enabled logical channel data, the MAC CE, the PC5 RRC message, the PC5-S message, or the HARQ feedback enabled MAC PDU (or the HARQ feedback enabled TB), if a CBR measurement value for sidelink carrier(s) configured with PSFCH (or sidelink carrier(s) in which HARQ feedback enabled MAC PDU transmission is allowed) or sidelink carrier(s) related to sidelink resource pool(s) configured with PSFCH is lower than a CBR threshold value for a pre-configured data-related priority (e.g., sidelink priority), the UE may (re-)select the sidelink carrier(s) as sidelink carrier(s) for HARQ feedback enabled MAC PDU transmission. If there are multiple sidelink carrier(s) configured with PSFCH (or sidelink carrier(s) in which HARQ feedback enabled MAC PDU transmission is allowed) or sidelink carrier(s) related to sidelink resource pool(s) configured with PSFCH, the UE may select a sidelink carrier with the lowest CBR measurement value among the sidelink carriers with CBR measurement values lower than the CBR threshold value for the pre-configured data-related priority (e.g., sidelink priority) as a sidelink carrier for HARQ feedback enabled MAC PDU transmission. Alternatively, if there are multiple sidelink carrier(s) configured with PSFCH (or sidelink carrier(s) in which HARQ feedback enabled MAC PDU transmission is allowed) or sidelink carrier(s) related to sidelink resource pool(s) configured with PSFCH, which sidelink carrier among sidelink carriers whose CBR measurement value is lower than the CBR threshold value for the pre-configured data-related priority (e.g., sidelink priority) is to be selected may be determined by UE implementation.

That is, the UE may perform a carrier selection procedure in the following order to select a sidelink carrier for HARQ feedback-enabled MAC PDU transmission:
1. Select sidelink carrier(s) in which HARQ feedback enabled MAC PDU transmission is allowed.
2. Select sidelink carrier(s) whose CBR measurement value is lower than the CBR threshold value for the pre-configured data-related priority (e.g., sidelink priority).
3. If multiple sidelink carriers are selected in step 1/2, select a sidelink carrier with the lowest CBR measurement value, or select a sidelink carrier based on UE implementation.

For example, if a SL RLF is declared in multi-carrier operation and sidelink carrier reselection is triggered, the UE (e.g., the transmitting UE) may reselect sidelink carrier(s) to be used (preferentially) among the remaining sidelink carrier(s) excluding the sidelink carrier for which SL RLF is declared, and regenerate sidelink grant(s) for the reselected sidelink carrier(s). However, if the sidelink carrier for which the SL RLF is declared is the only (remaining) sidelink carrier allowed to transmit the related packet/service, the UE may not trigger either sidelink carrier reselection or sidelink grant regeneration. Alternatively, if the sidelink carrier for which the SL RLF is declared is the only (remaining) sidelink carrier allowed to transmit the related packet/service, the UE may trigger only sidelink grant regeneration to regenerate sidelink grant(s) without triggering sidelink carrier reselection.

For example, the multi-carrier-capable UE may start a "resource reuse timer" if a SL RLF occurs in a unicast session or a PC5 RRC connection, and may release resources being used in all sidelink carriers/SL BWPs/sidelink resource pools/SL HARQ entities related to the PC5 RRC connection for which the SL RLF occurs. In addition, while the "resource reuse timer" is running, the UE may stop using (or release) resources being used in all sidelink carriers/SL BWPs/sidelink resource pools/SL HARQ entities related to the PC5 RRC connection for which the SL RLF occurs or resources reserved based on all sidelink carriers/SL BWPs/sidelink resource pools/SL HARQ entities related to the PC5 RRC connection for which the SL RLF occurs, or stop resource selection operation based on all sidelink carriers/SL BWPs/sidelink resource pools/SL HARQ entities related to the PC5 RRC connection for which the SL RLF occurs. If the "resource reuse timer" expires, the UE may resume using resources being used in all sidelink carriers/SL BWPs/sidelink resource pools/SL HARQ entities related to the PC5 RRC connection for which the SL RLF occurs or resources reserved based on all sidelink carriers/SL BWPs/sidelink resource pools/SL HARQ entities related to the PC5 RRC connection for which the SL RLF occurs, or restart resource (re-)selection operation based on all sidelink carriers/SL BWPs/sidelink resource pools/SL HARQ entities related to the PC5 RRC connection.

For example, the multi-carrier-capable UE may start a "resource reuse timer" if a SL RLF occurs in a unicast session or a PC5 RRC connection, and may release (or exclude) resources being used in a specific sidelink carrier/SL BWP/sidelink resource pool/SL HARQ entity related to the PC5 RRC connection for which the SL RLF occurs (e.g., among multiple sidelink carriers/SL BWPs/sidelink resource pools/SL HARQ entities related to the PC5 RRC connection, a specific sidelink carrier/SL BWP/sidelink resource pool/SL HARQ entity for which the number of DTXs reaches a threshold). In addition, while the "resource reuse timer" is running, the UE may stop using (or release or exclude) resources being used in a specific sidelink carrier/SL BWP/sidelink resource pool/SL HARQ entity related to the PC5 RRC connection fir which the SL RLF occurs or resources reserved based on a specific sidelink carrier/SL BWP/sidelink resource pool/SL HARQ entity related to the PC5 RRC connection for which the SL RLF occurs, or the UE may stop resource selection operation based on a specific sidelink carrier/SL BWP/sidelink resource pool/SL HARQ entity related to the PC5 RRC connection for which the SL RLF occurs. If the "resource reuse timer" expires, the UE may resume using resources being used in a specific sidelink carrier/SL BWP/sidelink resource pool/SL HARQ entity related to the PC5 RRC connection for which the SL RLF occurs or resources reserved based on a specific sidelink carrier/SL BWP/sidelink resource pool/SL HARQ entity related to the PC5 RRC connection for which the SL RLF occurs, or the UE may restart resource (re-)selection operation based on a specific sidelink carrier/SL BWP/sidelink resource pool/SL HARQ entity related to the PC5 RRC connection.

For example, if a SL RLF occurs in a unicast session or a PC5 RRC connection, the multi-carrier-capable UE may exclude resources being used in a specific sidelink carrier/SL BWP/sidelink resource pool/SL HARQ entity related to the PC5 RRC connection for which the SL RLF occurs (e.g., among multiple sidelink carriers/SL BWPs/sidelink resource pools/SL HARQ entities related to the PC5 RRC connection, a specific sidelink carrier/SL BWP/sidelink resource pool/SL HARQ entity for which the number of DTXs reaches a threshold) (or exclude resource (re-)selection operation based on a specific sidelink carrier/SL BWP/sidelink resource pool/SL HARQ entity for which the number of DTXs reaches a threshold), and the multi-carrier-capable UE may use resources in a specific sidelink carrier/SL BWP/sidelink resource pool/SL HARQ entity related to the PC5 RRC connection (for which the SL RLF occurs) (e.g., among multiple sidelink carriers/SL BWPs/sidelink resource pools/SL HARQ entities related to the PC5 RRC connection, a specific sidelink carrier/SL BWP/sidelink resource pool/SL HARQ entity for which the number of DTXs does not reach a threshold) (or may perform resource (re-)selection operation based on a specific sidelink carrier/SL BWP/sidelink resource pool/SL HARQ entity for which the number of DTXs does not reach a threshold).

Herein, for example, the DTX threshold number may be configured differently based on a sidelink priority, a sidelink reliability, a QoS profile, a CBR, a PQI, a LCH, or a sidelink carrier/SL BWP/sidelink resource pool/SL HARQ entity.

In the present disclosure, carrier (re-)selection, resource (re-)selection, and unicast communication operations of a multi-carrier-capable UE are proposed as follows.

For example, if reselection of a part of (re)transmission resources of a SL grant is triggered by a pre-configured operation/message (e.g., pre-emption and/or re-evaluation and/or UL-SL prioritization-based SL (re)transmission skipping and/or congestion control-based SL (re)transmission skipping and/or reception of an inter-UE coordination message), a sidelink carrier reselection procedure may be configured not to be triggered. For example, if such a rule is applied, the sidelink carrier reselection procedure may be interpreted as being triggered only if reselection is triggered for all resources related to the sidelink grant.

For example, if a sidelink MAC reset (and/or sidelink resource pool (or sidelink BWP) reconfiguration and/or sidelink carrier aggregation-enabled sidelink carrier candidate set reconfiguration (or reconfiguration of a set of carriers selected by SL carrier aggregation) and/or synchronization carrier reconfiguration and/or synchronization priority reconfiguration) occurs, sidelink carrier reselection (and/or resource reselection (on the related sidelink carrier)) may be triggered.

For example, a CBR threshold related to sidelink carrier (re)selection check (and/or maintaining existing sidelink carrier selection) may be configured differently for each service type (and/or priority) and/or QoS profile (e.g., latency, reliability, etc.) and/or LCH (or sidelink radio bearer or sidelink radio bearer type (e.g., SL DRB and SL SRB)) and/or sidelink carrier and/or sidelink carrier type (e.g., SL RLM carrier, synchronization carrier) and/or sidelink resource pool (or sidelink carrier (and/or BWP and/or resource pool) for which sidelink BWP and/or PSFCH resources are configured (or not configured)).

For example, the maximum count of DTX (e.g., an event in which feedback for PSCCH/PSSCH transmission is not received) related to SL RLF declaration may be configured differently based on the number of sidelink carriers related to SL carrier aggregation (and/or SL cast type (e.g., unicast, groupcast/broadcast) and/or SL HARQ feedback option (e.g., only-NACK, ACK/NACK) and/or sidelink carrier index).

For example, when a V2X layer transfers a packet to an AS layer, it may be configured to also transfer information related to a sidelink carrier on which the packet should be transmitted (e.g., in the case of a packet that REL-16/17 UEs should (together) receive, information related to an index of one sidelink carrier that they are monitoring).

For example, when (re)selecting a sidelink carrier used for generating a SL grant related to HARQ feedback-enabled data transmission, only sidelink carrier(s) including resource pool(s) (at least a pre-configured number (e.g., 1) of resource pools) configured with PSFCH resources may be selected, and/or at least a pre-configured (minimum) number (e.g., 1) of sidelink carrier(s) including resource pool(s) configured with PSFCH resources may be selected and sidelink carrier(s) not including resource pool(s) configured with PSFCH resources may also be selected. Herein, for example, in the above rule, the "resource pool" may be interpreted restrictively as a "normal pool" (or a "normal pool" and an "exceptional pool").

For example, in the case of SL carrier aggregation operation, the UE may expect that an exceptional pool (at least a pre-configured (minimum) number of exceptional pools) configured with PSFCH resources is configured for each sidelink carrier (or on sidelink carrier(s) related to SL carrier aggregation).

For example, for a UE with limited TX capability, when performing resource selection for sidelink carrier(s) related to SL carrier aggregation, (time) retransmission resource(s) related to a SL grant that have been cleared (related to the corresponding TB transmission) by receiving an ACK from the RX UE on a specific sidelink carrier may be configured not to be considered when checking whether the TX capability has been reached when selecting resource(s) on other sidelink carrier(s). Herein, for example, the SL grant including the retransmission resource(s) cleared based on receiving the ACK, which is not considered in the TX capability reachability in the corresponding rule, may be limited to a single MAC PDU-related SL grant (e.g., aperiodic resource reservation) (and/or a multiple MAC PDUs-related SL grant (e.g., periodic resource reservation)).

For example, the following operation may be configured between UEs performing SL carrier aggregation-based sidelink unicast operation.

Example) It may be configured to exchange (through pre-configured signaling (e.g., PC5 RRC)) capability information related to the number of PSFCHs that can be simultaneously transmitted (and/or received) (based on each carrier or each band combination).

Example) It may be configured not to perform DTX counting (corresponding to its own PSSCH transmission) when the TX UE skips a PSFCH RX operation due to performing a PSFCH TX operation. Herein, for example, whether or not to perform DTX counting in this case may be configured differently based on a (related) service type (and/or a priority and/or a QoS profile (e.g., latency, reliability, etc.)) and/or a congestion level (e.g., CBR, RSSI, RSRQ, SINR) (on a sidelink carrier).

Example) On multiple sidelink carriers related to SL carrier aggregation, if the TX UE performs PSSCH transmissions (including (some or all) HARQ feedback enabled data) and receives a pre-configured minimum threshold number/ratio (e.g., 1) or more of corresponding PSFCH transmissions, the TX UE may be configured not to perform DTX counting for the corresponding PSSCH transmissions. Herein, for example, the related threshold may be configured differently based on a (related) service type (and/or a priority and/or a QoS profile (e.g., latency, reliability, etc.)) and/or a congestion level (e.g., CBR, RSSI, RSRQ, SINR) (on a sidelink carrier). In addition, for example, the PSSCH transmissions (including (some or all) HARQ feedback enabled data) to which the above rule applies may be restricted to have the same PSFCH occasion (and/or the PSFCH reception time in the above rule may be restricted to the same PSFCH occasion (in time)).

Example) In a SL carrier aggregation operation situation, when performing PSFCH TX-RX prioritization, a PSFCH transmission operation may be configured to be performed if the number of PSFCH transmissions is greater than the number of PSFCH receptions (by a pre-configured threshold or more) (or if the number of PSFCH transmissions is greater than or equal to a pre-configured threshold or if the number of PSFCH receptions is less than or equal to a pre-configured threshold). Herein, for example, the rule may be applied only if a PSFCH transmission priority (and/or the highest (or lowest) priority of the plurality of PSFCH transmissions) is equal to a PSFCH reception priority (and/or the highest (or lowest) priority of the plurality of PSFCH receptions).

Example) The RX UE may be configured to transmit related information to the TX UE through pre-configured signaling (e.g., MAC CE) if PSFCH transmission is skipped due to application of PSFCH priority rule. Herein, for example, the information may include the number of skipped PSFCHs (and/or the related (L2) destination ID (and/or (L2) source ID) and/or the (time and/or frequency) resource location related to the skipped PSFCH) (per carrier or for multiple sidelink carriers).

Example) Through negotiation (and/or signaling exchange (e.g., PC5 RRC, MAC CE)) between the UEs (and/or from the network), (one or multiple) sidelink carrier(s) on which SL DTX counting is performed (and/or for SL RLM) may be selected, and such carrier(s) may be limited to those satisfying the following condition(s). Herein, for example, if the sidelink carrier(s) for this purpose is reconfigured, it may be configured to initialize the SL DTX counting value on the existing sidelink carrier (and/or to use/maintain the SL DTX counting value on the existing sidelink carrier). In addition, for example, the sidelink carrier(s) for the above purpose may be configured differently for each service type (e.g., (L2) destination) (and/or priority and/or QoS profile (e.g., latency, reliability, etc.) and/or congestion level).
Example) A sidelink carrier that includes a resource pool (at least a pre-configured (minimum) number of resource pools) configured with PSFCH resources, and/or
Example) A sidelink carrier with a relatively low or the lowest (or a relatively high or the highest) index among sidelink carriers used for sidelink unicast, and/or
Example) A sidelink carrier allowed for (service-related) packet transmission with the highest priority (or a priority higher than or equal to a pre-configured threshold level) among multiple services supported based on sidelink unicast, and/or
Example) A sidelink carrier with a congestion level (e.g., CBR, RSSI, RSRQ, SINR) (and/or SL quality (e.g., SL CSI)) that is higher (or lower) than a pre-configured threshold level among sidelink carriers used for sidelink unicast, and/or
Example) A synchronization reference carrier (on which SL SSB transmission is performed)

For example, when (re)selecting a sidelink carrier used for generating a SL grant related to HARQ feedback-enabled data transmission, only sidelink carrier(s) including resource pool(s) (at least a pre-configured number (e.g., 1) of resource pools) configured with PSFCH resources may be selected, and/or at least a pre-configured (minimum) number (e.g., 1) of sidelink carrier(s) including resource pool(s) configured with PSFCH resources may be selected and sidelink carrier(s) not including resource pool(s) configured with PSFCH resources may also be selected. Herein, for example, in the above rule, the "resource pool" may be interpreted restrictively as a "normal pool" (or a "normal pool" and an "exceptional pool").

For example, in the case of SL carrier aggregation operation, the UE may expect that an exceptional pool (at least a pre-configured (minimum) number of exceptional pools) configured with PSFCH resources is configured for each sidelink carrier (or on sidelink carriers related to SL carrier aggregation).

For example, for a UE with limited TX capability, when performing resource selection for sidelink carrier(s) related to SL carrier aggregation, (time) retransmission resource(s) related to a SL grant that have been cleared (related to the corresponding transport block transmission) by receiving an ACK from the RX UE on a specific sidelink carrier may be configured not to be considered when checking whether the TX capability has been reached when selecting resource(s) on other sidelink carrier(s). Herein, for example, the SL grant including the retransmission resource(s) cleared based on receiving the ACK, which is not considered in the TX capability reachability in the corresponding rule, may be limited to a single MAC PDU-related SL grant (e.g., aperiodic resource reservation) (and/or a multiple MAC PDUs-related SL grant (e.g., periodic resource reservation)).

For example, the following operation may be configured between UEs performing SL carrier aggregation-based sidelink unicast operation.

Example) It may be configured to exchange (through pre-configured signaling (e.g., PC5 RRC)) capability information related to the number of PSFCHs that can be simultaneously transmitted (and/or received) (based on each sidelink carrier or each band combination) (and/or information related to a type of SL mode it operates in (e.g., mode 1, mode 2) and/or connection status with the base station/network (e.g., RRC_CONNECTED, IDLE, INACTIVE)).

Example) It may be configured not to perform DTX counting (corresponding to its own PSSCH transmission) when the TX UE skips a PSFCH RX operation due to performing a PSFCH TX operation. Herein, for example, whether or not to perform DTX counting in this case may be configured differently based on a (related) service type (and/or a priority and/or a QoS profile (e.g., latency, reliability, etc.)) and/or a congestion level (e.g., CBR, RSSI, RSRQ, SINR) (on a sidelink carrier).

Example) On multiple sidelink carriers related to SL carrier aggregation, if the TX UE performs PSSCH transmissions (including (some or all) HARQ feedback enabled data) and receives a pre-configured minimum threshold number/ratio (e.g., 1) or more of corresponding PSFCH transmissions, the TX UE may be configured not to perform DTX counting for the corresponding PSSCH transmissions (and/or configured to initialize the DTX counting value (e.g., 0 or a pre-configured value)). Herein, for example, the related threshold may be configured differently based on a (related) service type (and/or a priority and/or a QoS profile (e.g., latency, reliability, etc.)) and/or a congestion level (e.g., CBR, RSSI, RSRQ, SINR) (on a sidelink carrier). In addition, for example, the PSSCH transmissions (including (some or all) HARQ feedback enabled data) to which the above rule applies may be restricted to have the same PSFCH occasion (and/or the PSFCH reception time in the above rule may be restricted to the same PSFCH occasion (in time)).

Example) In a SL carrier aggregation operation situation, when performing PSFCH TX-RX prioritization, a PSFCH transmission operation may be configured to be performed if the number of PSFCH transmissions is greater than the number of PSFCH receptions (by a pre-configured threshold or more) (or if the number of PSFCH transmissions is greater than or equal to a pre-configured threshold or if the number of PSFCH receptions is less than or equal to a pre-configured threshold). Herein, for example, the rule may be applied only if a PSFCH transmission priority (and/or the highest (or lowest) priority of the plurality of PSFCH transmissions) is equal to a PSFCH reception priority (and/or the highest (or lowest) priority of the plurality of PSFCH receptions).

Example) The RX UE may be configured to transmit related information to the TX UE through pre-configured signaling (e.g., MAC CE) if PSFCH transmission is skipped due to application of PSFCH priority rule. Herein, for example, the information may include the number of skipped PSFCHs (and/or the related (L2) destination ID (and/or (L2) source ID) and/or the (time and/or frequency) resource location related to the skipped PSFCH) (per sidelink carrier or for multiple sidelink carriers).

Example) Through negotiation (and/or signaling exchange (e.g., PC5 RRC, MAC CE)) between the UEs (and/or from the network), (one or multiple) sidelink carrier(s) on which SL DTX counting is performed (and/or for SL RLM) may be selected, and such sidelink carrier(s) may be limited to those satisfying the following condition(s). Herein, for example, if the sidelink carrier(s) for this purpose is reconfigured, it may be configured to initialize the SL DTX counting value on the existing sidelink carrier (e.g., 0 or a pre-configured value) (and/or to use/maintain the SL DTX counting value on the existing sidelink carrier). In addition, for example, the sidelink carrier(s) for the above purpose may be configured differently for each service type (e.g., (L2) destination) (and/or priority and/or QoS profile (e.g., latency, reliability, etc.) and/or congestion level).
Example) A sidelink carrier that includes a resource pool (at least a pre-configured (minimum) number of resource pools) configured with PSFCH resources, and/or
Example) A sidelink carrier with a relatively low or the lowest (or a relatively high or the highest) index among sidelink carriers used for sidelink unicast, and/or
Example) A sidelink carrier allowed for (service-related) packet transmission with the highest priority (or a priority higher than or equal to a pre-configured threshold level) among multiple services supported based on sidelink unicast, and/or
Example) A sidelink carrier with a congestion level (e.g., CBR, RSSI, RSRQ, SINR) (and/or SL quality (e.g., SL CSI)) that is higher (or lower) than a pre-configured threshold level among sidelink carriers used for sidelink unicast, and/or
Example) A synchronization reference carrier (on which SL SSB transmission is performed)

For example, a sidelink carrier allowed for transmission (and/or reception) of a pre-configured message may be pre-configured. Herein, for example, the sidelink carrier may be configured differently based on a service type (and/or a priority and/or a QoS profile (e.g. latency, reliability, etc.)) and/or a congestion level (e.g. CBR, RSSI, RSRQ, SINR) (on a sidelink carrier) and/or an associated release (e.g. REL-16/17, REL-18) and/or a SL mode (e.g. mode 1, mode 2). For example, (one) sidelink carrier may be pre-configured (per service type or (L2) destination ID) which (should) be included/selected in case of transmitting packets to be received by (at least) legacy REL-16/17 UEs (or REL-18 Mode 1 UEs or REL-18 UEs without SL carrier aggregation capability). In addition, for example, the message may be configured as PC5-S signaling (e.g., DCR, DCA, security setup message) (for forming a sidelink unicast session) (and/or PC5 RRC message and/or MAC CE message) and/or a pre-configured radio bearer (type) related message (e.g., SRB).

The multi-carrier exemplified in this disclosure may be extended to or interpreted as the carrier aggregation.

The sidelink multi-carrier exemplified in the present disclosure may be extended to or interpreted as the sidelink carrier aggregation. Furthermore, the sidelink carrier aggregation exemplified in the present disclosure may be extended to or interpreted as the sidelink multi-carrier.

The sidelink resource pool (or sidelink HARQ entity) exemplified in the present disclosure may be interpreted as the sidelink resource pool (or sidelink HARQ entity) for the specific sidelink carrier.

The sidelink carrier/SL BWP/SL HARQ entity-related CBR threshold exemplified in the present disclosure may be configured per priority, per QoS profile (e.g., PDB, reliability), per SL radio bearer, or per logical channel.

The sidelink carrier exemplified in the present disclosure may be extended to or interpreted as the sidelink BWP or the sidelink HARQ entity.

The unicast service exemplified in the present disclosure may be replaced with or interpreted as the pair of the source layer-2 ID and the destination layer-2 ID.

The groupcast service exemplified in the present disclosure may be replaced with or interpreted as the groupcast destination layer-2 ID.

The broadcast service exemplified in the present disclosure may be replaced with or interpreted as the broadcast destination layer-2 ID.

The term "carrier" as specified in the present disclosure may be replaced with or applied as "band", "resource block set of a particular carrier", "resource pool set of a particular carrier", or "channel".

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT (FBE) is applied. For example, whether or not the (some) proposed method/rule of the present disclosure is applied and/or related parameter(s) (e.g., threshold value(s)) may be configured specifically (or differently or independently) depending on whether or not Load Based LBT (LBE) is applied.

In embodiment(s) of the present disclosure, a beam may be replaced with or interpreted as a transmit beam and/or a receive beam.

In embodiment(s) of the present disclosure, information for a transmit beam or a receive beam transmitted and received by a UE may be replaced with or interpreted as resource information of a reference signal (RS) related to the transmit beam and resource information of a reference signal (RS) related to receive beam.

In embodiment(s) of the present disclosure, a DCR and/or DCA message may be replaced with or interpreted as a PC5-S DCR message and/or a PC5-S DCA message, etc.

In embodiment(s) of the present disclosure, a spatial setting and/or transmission configuration indication (TCI) information and/or quasi-co-location (QCL) information and/or a beam may refer to each other and/or may be replaced with or interpreted as beam-related information, beam direction, spatial domain transmission or reception filter, etc.

In embodiment(s) of the present disclosure, a beam may be replaced with or interpreted as a spatial filter.

In embodiment(s) of the present disclosure, a transmit/transmission beam may be replaced with or interpreted as a spatial transmission (TX) filter or a spatial domain transmission (TX) filter.

In embodiment(s) of the present disclosure, a receive beam may be replaced with or interpreted as a spatial reception (RX) filter or a spatial domain reception (RX) filter.

In embodiment(s) of the present disclosure, the same spatial setting information (or beam information) for transmission may mean that the spatial domain transmit filter (spatial domain TX filter) of the UE is the same for two different transmit signals. In embodiment(s) of the present disclosure, the same spatial setting information (or beam information) for reception may mean that two different receive signals are in a QCL 'TypeD' relationship and/or use the same spatial receive parameter (spatial RX parameter).

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s)

(e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured specifically (or differently or independently) depending on whether a PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

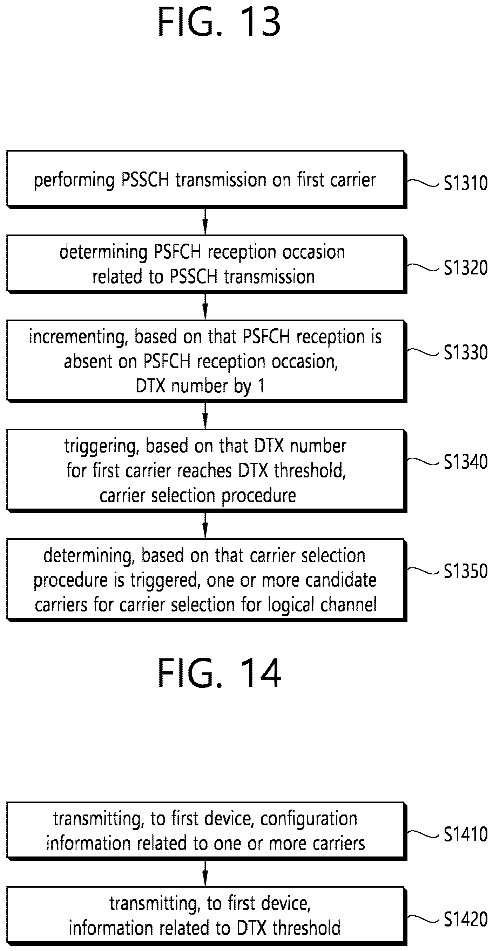

FIG. 13 shows a method for a first device to perform wireless communication, based on an embodiment of the present disclosure. The embodiment of FIG. 13 may be combined with various embodiments of the present disclosure.

Referring to FIG. 13, in step S1310, the first device may perform physical sidelink shared channel (PSSCH) transmission on a first carrier. In step S1320, the first device may determine a physical sidelink feedback channel (PSFCH) reception occasion related to the PSSCH transmission. In step S1330, the first device may increment, based on that PSFCH reception is absent on the PSFCH reception occasion, a discontinuous transmission (DTX) number by 1. In step S1340, the first device may trigger, based on that the DTX number for the first carrier reaches a DTX threshold, a carrier selection procedure. In step S1350, the first device may determine, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

For example, multiple carriers may be configured for the first device.

For example, the DTX threshold for triggering the carrier selection procedure may be configured for the first device.

For example, a channel busy ratio (CBR) of the second carrier may be below a CBR threshold related to a priority of the logical channel. For example, based on that the HARQ feedback is enabled for the logical channel, a third carrier that does not include a resource pool configured with PSFCH may not be determined as a candidate carrier for carrier selection for the logical channel. For example, the first carrier may be excluded from the one or more candidate carriers. For example, based on that the DTX number for the first carrier reaches the DTX threshold, the first carrier may be excluded from the one or more candidate carriers.

For example, based on that a carrier failure for the first carrier is detected, the first carrier may be excluded from the one or more candidate carriers. For example, based on that the DTX number for the first carrier reaches the DTX threshold, the carrier failure for the first carrier may be detected.

Additionally, for example, the first device may select, based on a CBR for the one or more candidate carriers, at least one carrier among the one or more candidate carriers.

For example, based on that a listen before talk (LBT) failure for the first carrier is detected, the carrier selection procedure may be triggered.

For example, based on that a beam failure related to the first carrier occurs, the carrier selection procedure may be triggered.

For example, based on that a radio resource control (RRC) reconfiguration failure related to the first carrier occurs, the carrier selection procedure may be triggered.

The proposed method can be applied to devices based on various embodiments of the present disclosure. First, the processor 102 of the first device 100 may control the transceiver 106 to perform physical sidelink shared channel (PSSCH) transmission on a first carrier. In addition, the processor 102 of the first device 100 may determine a physical sidelink feedback channel (PSFCH) reception occasion related to the PSSCH transmission. In addition, the processor 102 of the first device 100 may increment, based on that PSFCH reception is absent on the PSFCH reception occasion, a discontinuous transmission (DTX) number by 1. In addition, the processor 102 of the first device 100 may trigger, based on that the DTX number for the first carrier reaches a DTX threshold, a carrier selection procedure. In addition, the processor 102 of the first device 100 may determine, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: performing physical sidelink shared channel (PSSCH) transmission on a first carrier; determining a physical sidelink feedback channel (PSFCH) reception occasion related to the PSSCH transmission; incrementing, based on that PSFCH reception is absent on the PSFCH reception occasion, a discontinuous transmission (DTX) number by 1; triggering, based on that the DTX number for the first carrier reaches a DTX threshold, a carrier selection procedure; and determining, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: performing physical sidelink shared channel (PSSCH) transmission on a first carrier; determining a physical sidelink feedback channel (PSFCH) reception occasion related to the PSSCH transmission; incrementing, based on that PSFCH reception is absent on the PSFCH reception occasion, a discontinuous transmission (DTX) number by 1; triggering, based on that the DTX number for the first carrier reaches a DTX threshold, a carrier selection procedure; and determining, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a non-transitory computer-readable storage medium storing instructions may be provided. For example, the instructions, when executed, may cause a first device to perform operations comprising: performing physical sidelink shared channel (PSSCH) transmission on a first carrier; determining a physical sidelink feedback channel (PSFCH) reception occasion related to the PSSCH transmission; incrementing, based on that PSFCH reception is absent on the PSFCH reception occasion, a discontinuous transmission (DTX) number by 1; triggering, based on that the DTX number for the first carrier reaches a DTX threshold, a carrier selection procedure; and determining, based on that the carrier selection procedure is triggered, one or more candidate carriers for carrier selection for a logical channel. For example, based on that hybrid automatic repeat request (HARQ) feedback is enabled for the logical channel, a second carrier including a resource pool configured with PSFCH may be determined as a candidate carrier for carrier selection for the logical channel.

FIG. 14 shows a method for a second device to perform wireless communication, based on an embodiment of the present disclosure. The embodiment of FIG. 14 may be combined with various embodiments of the present disclosure.

Referring to FIG. 14, in step S1410, the second device may transmit, to a first device, configuration information related to one or more carriers. In step S1420, the second device may transmit, to the first device, information related to a discontinuous transmission (DTX) threshold. For example, based on that physical sidelink feedback channel (PSFCH) reception is absent on a PSFCH reception occasion related to physical sidelink shared channel (PSSCH) transmission performed on a first carrier among the one or more carriers, a DTX number may be incremented by 1. For example, based on that the DTX number for the first carrier reaches the DTX threshold, a carrier selection procedure may be triggered. For example, based on that the carrier selection procedure is triggered, one or more candidate carriers for carrier selection for a logical channel may be determined. For example, based on that hybrid automatic repeat request (HARQ) feedback is enabled for the logical channel, a second carrier including a resource pool configured with PSFCH may be determined as a candidate carrier for carrier selection for the logical channel.

The proposed method can be applied to devices based on various embodiments of the present disclosure. First, the processor 202 of the second device 200 may control the transceiver 206 to transmit, to a first device, configuration information related to one or more carriers. In addition, the processor 202 of the second device 200 may control the transceiver 206 to transmit, to the first device, information related to a discontinuous transmission (DTX) threshold. For example, based on that physical sidelink feedback channel (PSFCH) reception is absent on a PSFCH reception occasion related to physical sidelink shared channel (PSSCH) transmission performed on a first carrier among the one or more carriers, a DTX number may be incremented by 1. For example, based on that the DTX number for the first carrier reaches the DTX threshold, a carrier selection procedure may be triggered. For example, based on that the carrier selection procedure is triggered, one or more candidate carriers for carrier selection for a logical channel may be determined. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: transmitting, to a first device, configuration information related to one or more carriers; and transmitting, to the first device, information related to a discontinuous transmission (DTX) threshold. For example, based on that physical sidelink feedback channel (PSFCH) reception is absent on a PSFCH reception occasion related to physical sidelink shared channel (PSSCH) transmission performed on a first carrier among the one or more carriers, a DTX number may be incremented by 1. For example, based on that the DTX number for the first carrier reaches the DTX threshold, a carrier selection procedure may be triggered. For example, based on that the carrier selection procedure is triggered, one or more candidate carriers for carrier selection for a logical channel may be determined. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: transmitting, to a first device, configuration information related to one or more carriers; and transmitting, to the first device, information related to a discontinuous transmission (DTX) threshold. For example, based on that physical sidelink feedback channel (PSFCH) reception is absent on a PSFCH reception occasion related to physical sidelink shared channel (PSSCH) transmission performed on a first carrier among the one or more carriers, a DTX number may be incremented by 1. For example, based on that the DTX number for the first carrier reaches the DTX threshold, a carrier selection procedure may be triggered. For example, based on that the carrier selection procedure is triggered, one or more candidate carriers for carrier selection for a logical channel may be determined. For example, based on that hybrid automatic repeat request (HARQ) feedback is enabled for the logical channel, a second carrier including a resource pool configured with PSFCH may be determined as a candidate carrier for carrier selection for the logical channel.

Based on an embodiment of the present disclosure, a non-transitory computer-readable storage medium storing instructions may be provided. For example, the instructions, when executed, may cause a second device to perform operations comprising: transmitting, to a first device, configuration information related to one or more carriers; and transmitting, to the first device, information related to a discontinuous transmission (DTX) threshold. For example, based on that physical sidelink feedback channel (PSFCH) reception is absent on a PSFCH reception occasion related to physical sidelink shared channel (PSSCH) transmission performed on a first carrier among the one or more carriers, a DTX number may be incremented by 1. For example, based on that the DTX number for the first carrier reaches the DTX threshold, a carrier selection procedure may be triggered. For example, based on that the carrier selection procedure is triggered, one or more candidate carriers for carrier selection for a logical channel may be determined. For example, based on that hybrid automatic repeat request (HARQ) feedback is enabled for the logical channel, a second carrier including a resource pool configured with PSFCH may be determined as a candidate carrier for carrier selection for the logical channel.

Based on various embodiments of the present disclosure, in case that the UE performs communication based on multiple carriers, the UE can (re)select carrier(s) by triggering a carrier (re)selection procedure. For example, if a HARQ-based carrier failure for a specific carrier is detected (i.e., if the number of DTXs on a specific carrier reaches a DTX threshold), the UE can (re)select carrier(s) by triggering a carrier (re)selection procedure. Therefore, the problem of the UE continuously attempting communication on the carrier with a poor communication environment can be prevented. Furthermore, in case that the UE performs communication based on multiple carriers, the UE can (re)select carrier(s) by considering whether HARQ feedback for a logical channel is enabled. Through this, the reliability of communication can be improved.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

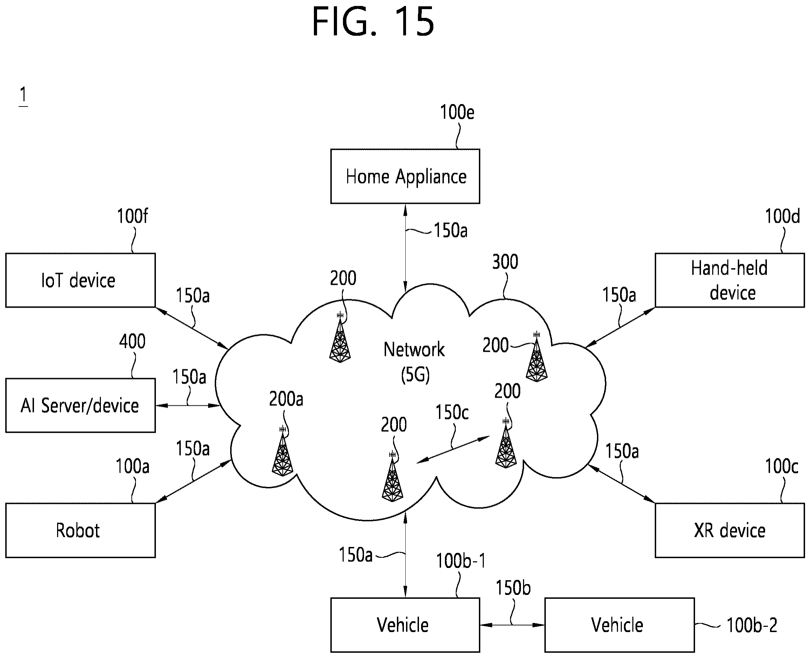

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

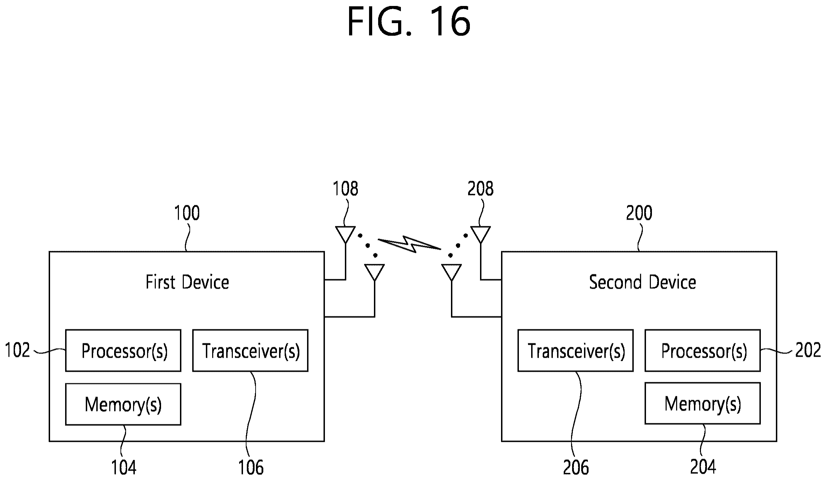

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

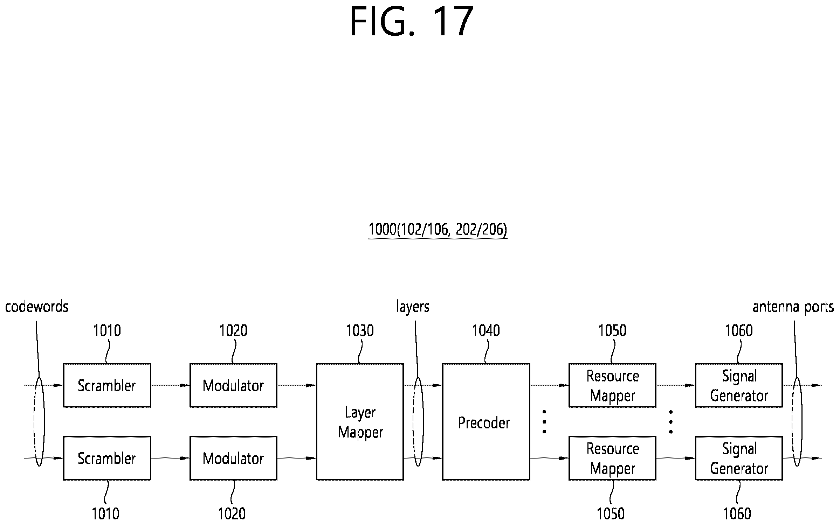

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

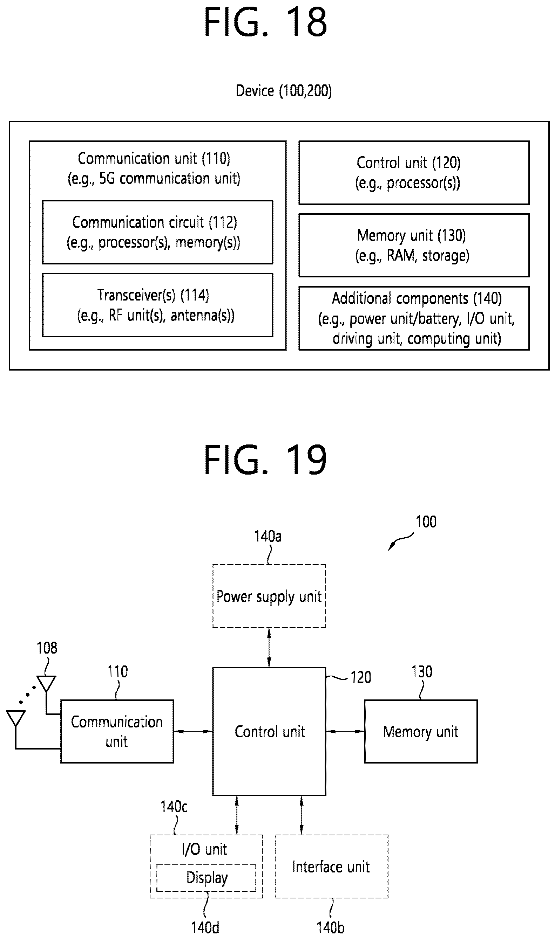

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

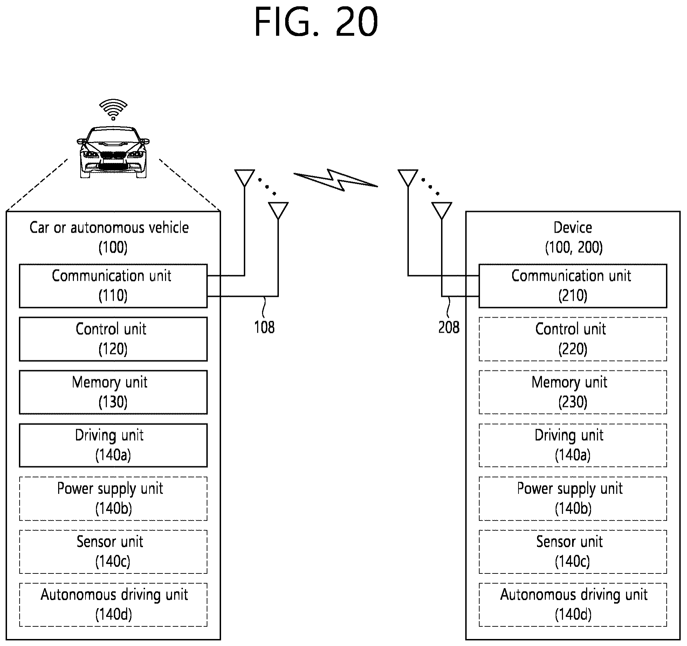

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
performing physical sidelink shared channel (PSSCH) transmission on a first carrier;
determining a physical sidelink feedback channel (PSFCH) reception occasion related to the PSSCH transmission;
incrementing, based on that PSFCH reception is absent on the PSFCH reception occasion, a discontinuous transmission (DTX) number by 1;
triggering, based on that the DTX number for the first carrier reaches a DTX threshold, a carrier selection procedure; and
determining, based on that the carrier selection procedure is triggered, one or more candidate carriers for carrier selection for a logical channel,
wherein, based on that hybrid automatic repeat request (HARQ) feedback is enabled for the logical channel, a second carrier including a resource pool configured with PSFCH is determined as a candidate carrier for carrier selection for the logical channel.

2. The method of claim 1, wherein multiple carriers are configured for the first device.

3. The method of claim 1, wherein the DTX threshold for triggering the carrier selection procedure is configured for the first device.

4. The method of claim 1, wherein a channel busy ratio (CBR) of the second carrier is below a CBR threshold related to a priority of the logical channel.

5. The method of claim 1, wherein, based on that the HARQ feedback is enabled for the logical channel, a third carrier that does not include a resource pool configured with PSFCH is not determined as a candidate carrier for carrier selection for the logical channel.

6. The method of claim 1, wherein the first carrier is excluded from the one or more candidate carriers.

7. The method of claim 1, wherein, based on that the DTX number for the first carrier reaches the DTX threshold, the first carrier is excluded from the one or more candidate carriers.

8. The method of claim 1, wherein, based on that a carrier failure for the first carrier is detected, the first carrier is excluded from the one or more candidate carriers.

9. The method of claim 8, wherein, based on that the DTX number for the first carrier reaches the DTX threshold, the carrier failure for the first carrier is detected.

10. The method of claim 1, further comprising:
selecting, based on a CBR for the one or more candidate carriers, at least one carrier among the one or more candidate carriers.

11. The method of claim 1, wherein, based on that a listen before talk (LBT) failure for the first carrier is detected, the carrier selection procedure is triggered.

12. The method of claim 1, wherein, based on that a beam failure related to the first carrier occurs, the carrier selection procedure is triggered.

13. The method of claim 1, wherein, based on that a radio resource control (RRC) reconfiguration failure related to the first carrier occurs, the carrier selection procedure is triggered.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
performing physical sidelink shared channel (PSSCH) transmission on a first carrier;
determining a physical sidelink feedback channel (PSFCH) reception occasion related to the PSSCH transmission;
incrementing, based on that PSFCH reception is absent on the PSFCH reception occasion, a discontinuous transmission (DTX) number by 1;
triggering, based on that the DTX number for the first carrier reaches a DTX threshold, a carrier selection procedure; and
determining, based on that the carrier selection procedure is triggered, one or more candidate carriers for carrier selection for a logical channel,
wherein, based on that hybrid automatic repeat request (HARQ) feedback is enabled for the logical channel, a second carrier including a resource pool configured with PSFCH is determined as a candidate carrier for carrier selection for the logical channel.

15. A processing device adapted to control a first device, the processing device comprising:
at least one processor; and
at least one memory connected to the at least one processor and storing instructions that, based on being executed by the at least one processor, cause the first device to perform operations comprising:
performing physical sidelink shared channel (PSSCH) transmission on a first carrier;
determining a physical sidelink feedback channel (PSFCH) reception occasion related to the PSSCH transmission;
incrementing, based on that PSFCH reception is absent on the PSFCH reception occasion, a discontinuous transmission (DTX) number by 1;
triggering, based on that the DTX number for the first carrier reaches a DTX threshold, a carrier selection procedure; and
determining, based on that the carrier selection procedure is triggered, one or more candidate carriers for carrier selection for a logical channel,
wherein, based on that hybrid automatic repeat request (HARQ) feedback is enabled for the logical channel, a second carrier including a resource pool configured with PSFCH is determined as a candidate carrier for carrier selection for the logical channel.

16. A non-transitory computer-readable storage medium storing instructions that, when executed, cause a first device to perform operations comprising:
performing physical sidelink shared channel (PSSCH) transmission on a first carrier;
determining a physical sidelink feedback channel (PSFCH) reception occasion related to the PSSCH transmission;
incrementing, based on that PSFCH reception is absent on the PSFCH reception occasion, a discontinuous transmission (DTX) number by 1;
triggering, based on that the DTX number for the first carrier reaches a DTX threshold, a carrier selection procedure; and
determining, based on that the carrier selection procedure is triggered, one or more candidate carriers for carrier selection for a logical channel,
wherein, based on that hybrid automatic repeat request (HARQ) feedback is enabled for the logical channel, a second carrier including a resource pool configured with PSFCH is determined as a candidate carrier for carrier selection for the logical channel.

17. A method for performing wireless communication by a second device, the method comprising:
transmitting, to a first device, configuration information related to one or more carriers; and
transmitting, to the first device, information related to a discontinuous transmission (DTX) threshold,
wherein, based on that physical sidelink feedback channel (PSFCH) reception is absent on a PSFCH reception occasion related to physical sidelink shared channel (PSSCH) transmission performed on a first carrier among the one or more carriers, a DTX number is incremented by 1,
wherein, based on that the DTX number for the first carrier reaches the DTX threshold, a carrier selection procedure is triggered,
wherein, based on that the carrier selection procedure is triggered, one or more candidate carriers for carrier selection for a logical channel are determined, and
wherein, based on that hybrid automatic repeat request (HARQ) feedback is enabled for the logical channel, a second carrier including a resource pool configured with PSFCH is determined as a candidate carrier for carrier selection for the logical channel.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
transmitting, to a first device, configuration information related to one or more carriers; and
transmitting, to the first device, information related to a discontinuous transmission (DTX) threshold,
wherein, based on that physical sidelink feedback channel (PSFCH) reception is absent on a PSFCH reception occasion related to physical sidelink shared channel (PSSCH) transmission performed on a first carrier among the one or more carriers, a DTX number is incremented by 1,
wherein, based on that the DTX number for the first carrier reaches the DTX threshold, a carrier selection procedure is triggered,
wherein, based on that the carrier selection procedure is triggered, one or more candidate carriers for carrier selection for a logical channel are determined, and
wherein, based on that hybrid automatic repeat request (HARQ) feedback is enabled for the logical channel, a second carrier including a resource pool configured with PSFCH is determined as a candidate carrier for carrier selection for the logical channel.

19. A processing device adapted to control a second device, the processing device comprising:
at least one processor; and
at least one memory connected to the at least one processor and storing instructions that, based on being executed by the at least one processor, cause the second device to perform operations comprising:
transmitting, to a first device, configuration information related to one or more carriers; and
transmitting, to the first device, information related to a discontinuous transmission (DTX) threshold,
wherein, based on that physical sidelink feedback channel (PSFCH) reception is absent on a PSFCH reception occasion related to physical sidelink shared channel (PSSCH) transmission performed on a first carrier among the one or more carriers, a DTX number is incremented by 1,
wherein, based on that the DTX number for the first carrier reaches the DTX threshold, a carrier selection procedure is triggered,
wherein, based on that the carrier selection procedure is triggered, one or more candidate carriers for carrier selection for a logical channel are determined, and
wherein, based on that hybrid automatic repeat request (HARQ) feedback is enabled for the logical channel, a second carrier including a resource pool configured with PSFCH is determined as a candidate carrier for carrier selection for the logical channel.

20. A non-transitory computer-readable storage medium storing instructions that, when executed, cause a second device to perform operations comprising:
transmitting, to a first device, configuration information related to one or more carriers; and
transmitting, to the first device, information related to a discontinuous transmission (DTX) threshold,
wherein, based on that physical sidelink feedback channel (PSFCH) reception is absent on a PSFCH reception occasion related to physical sidelink shared channel (PSSCH) transmission performed on a first carrier among the one or more carriers, a DTX number is incremented by 1,
wherein, based on that the DTX number for the first carrier reaches the DTX threshold, a carrier selection procedure is triggered,
wherein, based on that the carrier selection procedure is triggered, one or more candidate carriers for carrier selection for a logical channel are determined, and
wherein, based on that hybrid automatic repeat request (HARQ) feedback is enabled for the logical channel, a second carrier including a resource pool configured with PSFCH is determined as a candidate carrier for carrier selection for the logical channel.
